# EUROPEAN PATENT APPLICATION

(11) **EP 3 203 185 A1**
(43) Date of publication of application: **09.08.2017**
(21) Application number: 17382050.7
(22) Date of filing: 06.02.2017
(51) Int. Cl.: G01C 21/16, F16L 55/48

(54) **SYSTEM AND METHOD FOR DETERMINING PATHS IN UNDERGROUND PIPELINES**

(30) Priority: 04.02.2016 ES 201630126
(71) Applicant: Tubecheck S.L., 33008 Oviedo (ES)
(72) Inventor: Fernández Villanueva, Daniel, 33204 Gijón (Asturias) (ES); Rivera Blázquez, Óscar, 33204 Gijón (Asturias) (ES); Álvarez Álvarez, Juan Carlos, 33204 Gijón (Asturias) (ES); Nuño García, Fernando, 33204 Gijón (Asturias) (ES)
(74) Representative: Carlos Hernando, Borja

(57) **Abstract**

The system comprises:
- a mobile platform (102) provided for the movement thereof in an underground pipeline in order carry out an inspection thereof;
- a reference system (103) with one or more non-inertial sensors to control the distance travelled by the mobile platform (102);
- an electronic module (101) linked to said mobile platform (102) and equipped with inertial sensors (304) to carry out a mapping in a section of the underground pipeline based on acquired data that provide navigation signals and temporal patterns of the same; and
computation means to calculate the path followed by the mobile platform (102) taking into consideration the data acquired and the associated temporal patterns, said acquired data being corrected with regards to possible deviations by means of a comparison with data obtained by the non-inertial sensor(s).

## Description

### Application field

The present invention generally relates to systems and methods for inspecting underground structures. In particular, the present invention relates to a system and method for determining paths, described by a remote-controlled mobile platform in underground pipelines.

In the present invention, mapping should be understood as a 2D or 3D graph of the path of the underground pipeline, obtained based on the trajectory carried out by the mobile platform, this path preferably having been previously corrected and filtered.

### Background art

Currently, public underground pipelines are often inadequately recorded or portions of the network are even unknown. The continuous modifications with changes to the layout and repairs lead to uncertainty with regards to having clear and accurate documentation that makes the necessary maintenance and repair tasks easier. Therefore, the use of new methods and technologies that facilitate the mapping of said pipelines quickly and in a non-invasive manner is necessary.

Furthermore, the inspection tasks carried out by means of remote-controlled mobile platforms, which are equipped with vision systems are increasingly common and very useful for maintaining underground pipelines as said inspections may be carried out non-invasively. The combination of these devices with a mapping system enables the capacity thereof be expanded and added value is provided. In this way, the mobile platforms may carry out both inspection and mapping tasks as necessary or both simultaneously, saving time and costs.

Today, devices capable of estimating the path described by a vehicle through the use of satellite positioning systems (e.g. GPS signals) is already known in several patents, for example patent ES-T3-2343821. However, these methods are not viable in underground pipelines, where the low coverage does not guarantee a stable signal.

There are also several patents that refer to inspection systems incorporated in mobile devices known as PIGs (Pipeline Inspection Gauge), which are specially designed to move through pipelines with a circular cross section due to the diametral configuration similar to the underground pipe/pipeline, such that they are moved by the force of the fluid flow itself. Several patents or patent applications such as US-A-4747317, US-B1-4945775, US-A-4717875 or US6243657 include inertial sensors located in said PIG devices in order to locate defects or anomalies, such as curvature changes, detected throughout the inspection process. These systems are designed for the periodic inspection of a specific pipeline, which means that some of them, such as that which is described in document US-A-4747317, require a permanent installation of elements for detection along the pipe, which is not economically viable for one-off inspections in several pipelines. Furthermore, the movement means itself of these devices means that they are not viable for pipelines that do not have a certain continuous flow and the physical shape thereof means that it is not suitable in sections with variable diameters and/or with abrupt direction changes, as well as requiring access routes that are specially designed for them and can only be used in pipelines with a circular cross section.

Patent US-B1-6243483 presents a PIG that has an inertial measurement unit and an odometer that are incorporated in order to obtain the path it travels. This system is also designed to be used permanently in a specific pipeline, which must have and have installed magnetic detection points of the passage of the mobile device, the coordinates of which must be known beforehand. Therefore, as access to the pipeline is required for the installation of detectors, it means that the system is not practical for one-off, non-invasive inspections. Moreover, the movement means itself controlled by the PIG by means of the flow of the pipe does not take into account the measurements that must be taken in the case of a remote-controlled mobile inspection device, where the movement stops and changes direction frequently.

Patent ES-T3-2541103 presents a device for detecting anomalies in pipelines which moves along the same by rolling. In this case, the sensor unit is located in a cylindrical or spherical casing that, depending on whether the density thereof is greater or lesser than that of the transporting liquid, moves by rolling on the lower or upper portion of the pipe respectively. In order to estimate the location of the anomalies detected during the path, the sensor unit uses accelerometers and magnetometers to count the number of revolutions of the unit as it rolls. In this way, the length of the path may be estimated by knowing the radius of the sphere that forms the sensor unit. Said system again has the drawback that it requires a minimum flow in order to move. Furthermore, only an approximate calculation of the distance travelled is considered, thus the path is not known.

Patent US-B2-7100463 uses a mobile platform to locate the Cartesian coordinates of a pipeline, using inertial sensors and a pressure sensor based on the Venturi effect that serves as a reference of the velocity and is used as an odometer. Similarly to the PIG devices indicated, the mobile device requires a flow in the pipeline both for the movement thereof and also to obtain a signal from the pressure sensor.

Patent US-B1-8547428 presents a 3D mapping and visualisation system for pipes based on the integration of a probe and inertial sensors to a camera inspection system that is guided by semi-rigid cable. This system requires an external electromagnetic locator to detect the inspection unit, thus meaning that factors such as depth, or if the magnetic field is distorted by residual magnetism or adjacent ferromagnetic materials, affect it greatly. Moreover, the distances that the device enables the exploration of by means of a semi-rigid cable are smaller than those possible by means of a self-propelled mobile platform, in addition to the fact that the time used is shorter.

Therefore, there is the need to offer a new system, and method, to determine paths in underground pipelines, non-invasively and without the need to modify or install secondary elements in the underground pipeline, being suitable to work in underground pipelines where coverage does not reach and adaptable to the inspection systems currently used.

### Description of the invention

For that purpose, exemplary embodiments of the present invention provide, in accordance with a first aspect, a system for determining paths in underground pipelines, which comprises, similarly to those of the techniques known in the state of the art, a mobile platform provided for the movement thereof in an underground pipeline in order to carry out an inspection of the same, and a reference system that includes one or more non-inertial sensors (such as an odometer), connected to the mobile platform to control the distance travelled by the mobile platform with respect to a reference point, as it moves through the underground pipeline.

Unlike the solutions known in the state of the art, the system proposed by the present invention further comprises an electronic module linked to said mobile platform, and independent thereof, and equipped with a plurality of inertial sensors to carry out a mapping of a section of the underground pipeline to be inspected; and computation means configured to calculate, by executing a computation algorithm, the path followed by the mobile platform in said section, taking into consideration at least some data acquired by said electronic module that provides navigation signals and associated temporal patterns, said data acquired being corrected with regards to possible deviations by means of a comparison with data obtained by said one or more non-inertial sensors.

According to the present invention, it is also provided that the non-inertial sensors may be included in the mobile platform itself.

In an exemplary embodiment, the system proposed includes a storage module to save the acquired data that provide navigation and associated temporal pattern signals. Likewise, the storage module may be included in the electronic module.

In an exemplary embodiment, the system proposed further comprises a precision land positioning device to establish start and end coordinates of said section of the underground pipeline to be inspected.

The inertial sensors may comprise means for measuring linear accelerations, such as accelerometers, and means for measuring angular velocities, such as gyroscopes, of the mobile platform. Likewise, the aforementioned inertial sensors may acquire the data of the navigation signals in 2 or 3 dimensions.

In an exemplary embodiment, the electronic module also includes, in association with the means for measuring linear accelerations of the mobile platform, means for calculating time and temperature registration to compensate thermal deviations in the acquired data. Similarly, the electronic module may also include, in association with said means for measuring linear accelerations of the mobile platform, means for calculating time and registering temperature and an analogue/digital converter to digitize voltage data.

In an exemplary embodiment, the electronic module comprises a sealed casing for the securing thereof to the mobile platform. Likewise, the electronic module may include one or more batteries for an autonomous power supply of the same.

The computation means, in an exemplary embodiment, form part of the electronic module itself. In this case, the electronic module includes wireless communication means to receive control instructions from a computation device (such as a personal computer (PC), a smartphone, at tablet, etc.) and to transmit the corrected data and temporal patterns to said computation device for the visualisation thereof.

Alternatively, the computation means may form part of a computation device that is remote to the electronic module, located on the outside of the underground pipeline, such as a personal computer (PC), a smartphone, a tablet, etc. In this case, the electronic module includes the wireless communication means necessary to transmit the corrected data and temporal patterns to the aforementioned remote computation device.

Likewise, the electronic module may be configured to receive control instructions and to transmit the aforementioned corrected data and temporal patterns either to the same computation device, remote to the electronic module, or to different computation devices, which are remote. That is to say, the electronic module may receive control instructions from a first computation device (for example, a personal computer) and may send the corrected data, for the processing and visualisation thereof, to another different computation device (for example, to another personal computer or a tablet).

In accordance with a second aspect, the present invention provides a method for determining paths in underground pipelines, which comprises moving a mobile platform in an underground pipeline to carry out an inspection thereof, said mobile platform being connected to a reference system that includes one or more non-inertial sensors and controls the distance travelled by the mobile platform, with respect to a reference point, as it moves through the underground pipeline.

Characteristically, the method carries out a mapping of the section of the underground pipeline to be inspected by means of:
- acquisition, by an electronic module linked to the mobile platform, of data that provide navigation signals, obtained as the mobile platform moves in said underground pipeline, and the acquisition of temporal patterns in which said data that provide navigation signals have been acquired, wherein said acquisition is carried out by a plurality of inertial sensors included in the electronic module; and
- detection and segmentation by using the data acquired by the plurality of inertial sensors of the movement of the mobile platform during the acquisition of said data, and
- calculation, by computation means, by means of the execution of a computation algorithm, of the path followed by the mobile platform in the aforementioned section, taking into consideration at least the acquired data and the associated temporal patterns, the aforementioned acquired data being corrected with regards to possible deviations by means of a comparison with data obtained by said one or more non-inertial sensors.

The acquired data and the associated temporal patterns may be stored in a memory before carrying out said calculation of the path.

Likewise, in the method proposed, start and end coordinates of the aforementioned section of the underground pipeline to be inspected may be established in the mobile platform by means of a land positioning device.

In an exemplary embodiment, the electronic module is controlled by a computation device that provides orders (for example, received by means of wireless technology) related to the acquisition moments of said data from the inertial sensors. Moreover, additional information may be provided including at least a series of points of said section of the underground pipeline to be inspected in which defects have been identified and/or information about the distance travelled by the mobile platform. This additional information is stored in the computation device and is transmitted to the electronic module once the mapping of the section of the underground pipeline is completed and it is possible to establish said wireless communication. By means of the time reference of both devices, the additional information is synchronised with the calculation of the path followed by the mobile platform.

In even another exemplary embodiment, the method further comprises showing the calculated path on a screen of a computation device in the form of a two-dimensional or three-dimensional graph.

Therefore, the present invention provides an underground pipeline mapping system that is non-invasive as it does not require modifications or the installation of secondary elements in the pipeline to be mapped.

The system is preferably designed in a modular and independent manner for the use thereof as needed with any mobile platform, only having to modify the attachment or fastening system of the electronic to the same platform.

The data collection and post-processing of these is optimised for the use thereof in remote-controlled mobile devices handled by operators, where there are frequent stops and changes in direction. The data of the path are preferably filtered to obtain the mapping of the pipeline.

The present invention may be used in both pipelines with and without flow by adapting the mobile platform.

Likewise, the present invention only depends on the use of satellite positioning signals at the insertion and extraction positions of the mobile platform, making it suitable to work in underground pipelines, where there is no coverage.

### Brief description of the drawings

The previous advantages and characteristics, in addition to others, shall be understood more fully in light of the following detailed description of exemplary embodiments, with reference to the drawings attached, which must be taken by way of illustration and not limitation, wherein:
Fig. 1 shows a system for determining the path followed by a remote-controlled mobile platform as it moves in an underground pipeline, according to an exemplary and illustrative embodiment of the present invention.
Fig. 2 schematically shows the different modules/units that form the electronic module linked to the mobile platform, according to a preferred exemplary embodiment.
Fig. 3 schematically shows the electronic unit of the aforementioned electronic module.
Fig. 4 shows, by means of a flow and functional block diagram, a method for determining paths in underground pipelines, according to an exemplary embodiment of the present invention.
Fig. 5 is a block diagram that shows the different elements used by the computation algorithm proposed by the present invention in order to obtain the paths followed by the mobile platform based on the data acquired by the electronic module.

### Detailed description of the invention and of various exemplary embodiments

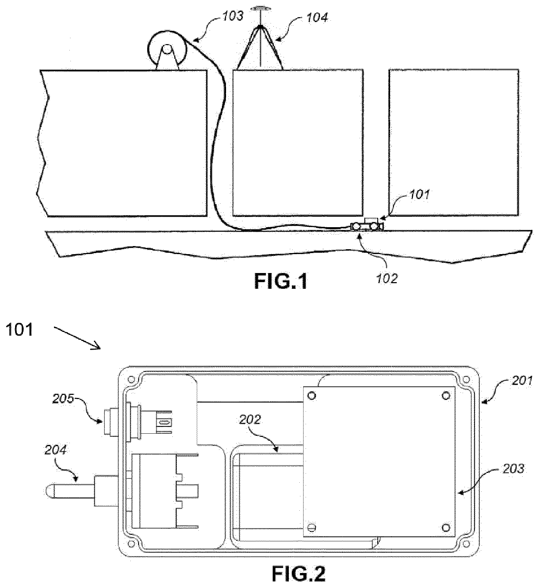

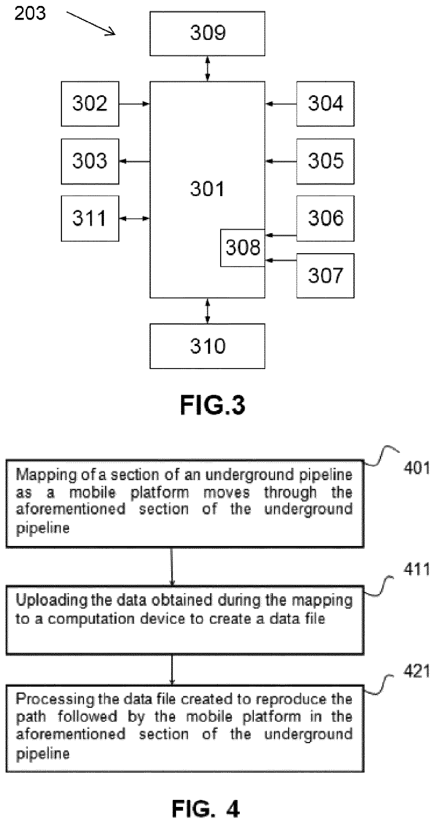

Fig. 1 shows an exemplary embodiment of a system for determining paths followed by a remote-controlled mobile platform 102 as it moves in an underground pipeline. In this environment, the mobile platform 102 generally does not have access to the position coordinates thereof, using for example, GPS signals, and therefore, the present invention uses inertial navigation techniques. These techniques consist in the use of inertial sensors 304 (see figure 3) such as accelerometers, gyroscopes, magnetometers, among others, in order to monitor the movements (measurement of linear accelerations and angular velocities for example) to which the mobile platform 102 is subjected. What is known as an Inertial Measurement Unit (IMU), which is widely used in the navigation field, is obtained by means of processing the signals of said inertial sensors 304. However, these units have an accumulative error and a high resolution IMU is necessary, which is capable of detecting the rotation of the Earth, in order to obtain a reliable path. Said devices are very expensive and difficult to access. Therefore, the present invention, in addition to the aforementioned inertial sensors 304 in order to carry out a mapping of a section of the underground pipeline, also uses a reference system 103 of the distance travelled by the mobile platform 102 with the inertial sensors (for example, an odometer) in order to reduce the accumulative error.

The equipment necessary for carrying out a mapping consists, on the one hand, of an electronic module 101, preferably equipped with its own power supply and protected by a sealed mechanical support 201, or casing, (see figure 2) with the capacity to be secured to the mobile platform 102, and which includes the aforementioned inertial sensors 304, in order to acquire the navigation signals as the mobile platform 102 moves through a section of the underground pipeline, to acquire the temporal patterns in which the aforementioned data from the navigation signals have been acquired and to detect and segment the movement of the mobile platform 102 during the acquisition of the data.

According to this exemplary embodiment, the aforementioned electronic module 101 also includes (see figure 3) communication means 309, preferably wireless, and a storage module 310 to store the acquired data that the navigation signals and the associated temporal patterns provide, and the aforementioned reference system 103 has an automatic rewinder with a turn counter for the power supply cable, control and visualisation of the distance travelled by the mobile platform 102. Likewise, the system further comprises a precision land positioning device 104, and computation means (not shown in the figure) which enable communication, for example wireless, with the electronic module 101 and sufficient capacity to handle and analyse the data stored after the mapping process. Said computation means have software (computation algorithm) installed, which is used to carry out the processing of the acquired data.

Fig. 2 shows a preferred exemplary embodiment of the electronic module 101. As may be seen in the figure, the electronic module 101 has the aforementioned casing 201, at least one battery 202 to supply the electronic unit 203 thereof, a selector 204 so that the operation mode may be chosen and a connector 205 to charge the battery 202.

Fig. 3 shows the electronic unit 203 used by the electronic module 101 for the acquisition, digitisation, storage and subsequent uploading/transmission of the navigation signals. This electronic unit 203, according to an exemplary embodiment, has signalling means 303 (for example, light indicators, a screen or an acoustic emitter) to know the state of the battery 202, selection means 302 through which a user may chose the operation mode of the electronic module 101, a microcontroller 301, which has an AD converter 308 to digitise voltage data, a voltage reference 307, a connector 311 to programme the electronic module 101 and other internal modules, means for calculating time and registering temperature 305, an indicator 306 of the state of the battery 202, the aforementioned storage module 310 and the aforementioned means for communicating with other devices wirelessly 309, as well as inertial sensors 304. Preferably, according to the invention, two accelerometers and a gyroscope are used to acquire the data from the navigation signals in 2 dimensions (not limiting since in other embodiments the present invention may use a different number of inertial sensors, for example a configuration of 3 accelerometers and 3 gyroscopes and acquire data in 3 dimensions). This reduction of the inertial sensors enables the calibration process of the units that form the electronic module 101 to be simplified, saving time and costs.

With reference to Fig. 4, it shows an exemplary embodiment of a method for determining paths in underground pipelines. The method may be divided into three stages: mapping 401, uploading 411 and analysis 421.

In the first stage (mapping 401), the mobile platform 102 is moved through a section of the underground pipeline to inspect the same. The electronic module 101 is secured and turned on before the path is started. To control it, a computation device (or first computation device) with one or more processors and at least one memory, and with wireless communication capacity, such as a personal computer (PC), a smartphone, a tablet, etc. is provided, through which the start and stop order for collecting data from the inertial sensors 304 is sent. The aforementioned software also introduces data of interest, such as points where defects are identified, coordinate data to locate the start and end of the path carried out, notes on the distance travelled or any specific comments considered appropriate. This complementary information is incorporated and synchronised with the obtained data when the path is reproduced in the final stage, analysis 421. In the mapping method 401, the start and end coordinates of the section to be analysed will initially be taken using the aforementioned land positioning device 104, which shall be the access points to the section of the underground pipeline. After turning on and securing the electronic module 101 to the mobile platform 102, wireless communication is established and the assembly is lowered to the underground pipeline, where the recording of data from the inertial sensors 304 starts. The reference or name of the access and the previously obtained coordinates thereof are indicated. During the path, there are stops to introduce the measurements taken by the reference system 103, for example periodically, which serve to correct the possible deviation generated in the inertial sensors 304. Similarly, the complementary data of interest may be introduced, which are linked to the position of the mobile platform 102 in said instant. When the mobile platform 102 reaches the end of the path, the coordinates of the second access point and the final distance travelled are indicated, the data collection the being stopped and the assembly extracted.

Once the mapping process 401 of the underground pipeline is completed, the data stored in the electronic module 101 is transmitted or uploaded 411 to the aforementioned computation device (Tablet, Smartphone, PC, etc.). Through a computer application developed for this purpose, a file formed of the various raw data derived from the measurement of the sensors, the time reference and all the data related to notes that have been made, is created.

In the last stage, analysis 421, the created data file is processed. In order to do so, the same computation device used to control and communicate with the electronic module 101, or alternatively, another additional computation device (or second computation device) may be used, as long as the latter has the processing capacity to execute the software with the computation algorithm developed to process the data. The software reproduces the path described with the data uploaded in the previous stage, starting at the start coordinates of the mapping and based on the data of the inertial and non-inertial sensors 304 (by comparing the same), and ending at the second signalled coordinate point. In this way, a path is created with multiple geolocated points that may be visualised on a two-dimensional or three-dimensional graph and on which the specific coordinates of the points that have been signalled during the first stage may be seen and known. The programme also filters the path to obtain the mapping of the underground pipeline, enabling the imported pipeline to be saved and edited, being incorporated into a database of the programme, thus enabling a network with multiple mapped underground pipelines to be managed.

Likewise, the uploading 411 and analysis 421 stages in an alternative exemplary embodiment may be carried out in the electronic module 101 itself, that is to say, the computation means are integrated in the electronic module 101 itself. In this case, the electronic module 101 is controlled by a computation device such as a personal computer (PC), smartphone, a tablet, etc. And transmits the corrected data and temporal patterns to said computation device for the visualisation thereof, for example in the form of a two-dimensional or three-dimensional graph.

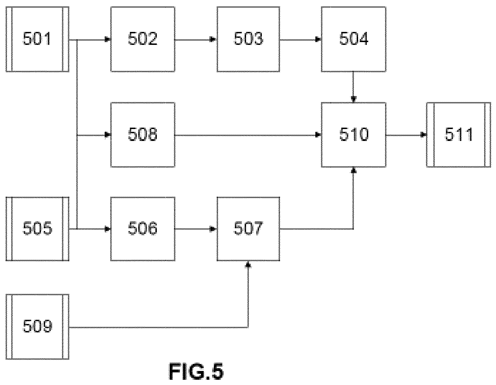

Fig. 5 shows a block diagram showing the different elements used by the computation algorithm in order to obtain the paths followed by the mobile platform 102 based on the data acquired by the electronic module 101, according to an exemplary embodiment. The processing of the acquired data and the temporal patterns is based on the inertial signals obtained by a gyroscope 501, from accelerometers 505 and from one-off measurements taken during the mapping process 509. The inertial signals obtained by the gyroscope 501 are subjected to a compensation process from the effect of the temperature on the measurements 502, followed by a discrete integration of the signals 503 and lastly a compensation method of the offset 504, which results in an estimation of the orientation through the entire path being obtained. The accelerometers (two are preferably used) go through the same temperature compensation 506 and then a velocity calculation taking into account the odometric measurements (non-inertial) through the entire path 507 followed by the mobile platform 102 (for example by comparing the measurements carried out by the different sensors). Both signals of the gyroscope and the accelerometers 501 and 505 are also used to detect and segment the movement 508 of the mobile platform 102. In this way, velocities and orientations are combined only depending on whether movement 510 was detected in said instant, generating in this way the compete path 511 followed by the mobile platform 102. This method, first segmenting the movement before combining the signals in a conventional Kalman filter, enables the anomalies which may arise in the path due to the pauses in the mobile platform 102 to be detected and corrected. Furthermore, the software developed processes these stops and analyses the subsequent behaviour of the path, such that direction changes in the movement, rotation of the mobile platform 102 on a vertical axis whilst stopped, obstacle avoidance and any other type of erratic movement characteristic of the mobile platform 102 during the meticulous inspection of the section of the underground pipeline are detected. This enables the data of the path followed by the mobile platform 102 to be filtered and the points that are not relevant for the final mapping of the underground pipeline to be removed.

A person skilled in the art may introduce changes and modifications in the exemplary embodiments described without departing from the scope of the invention as defined in the attached claims.

## Claims

1. A system for determining paths in underground pipelines, the system comprising:
- a mobile platform (102) provided for the movement thereof in an underground pipeline in order carry out an inspection of the same; and
- a reference system (103) that includes one or more non-inertial sensors, connected to the mobile platform (102) to control the distance travelled by the mobile platform (102) with respect to a reference point, as it moves through the underground pipeline,
Said system being **characterised in that** it further comprises:
- an electronic module (101) linked to said mobile platform (102) and equipped with a plurality of inertial sensors (304) to carry out a mapping in a section of the underground pipeline to be inspected, wherein said mapping comprises:
∘ acquiring, through said plurality of inertial sensors (304), data that provide navigation signals as the mobile platform (102) moves in said underground pipeline;
∘ acquiring temporal patterns in which said data that provide navigation signals have been acquired; and
∘ detecting and segmenting by using the data acquired by the plurality of inertial sensors (304) the movement of the mobile platform (102) during the acquisition of the data; and
- computation means, configured to calculate, by means of the execution of a computation algorithm, the path followed by the mobile platform (102) in said section, taking into consideration at least said data acquired by said electronic module (101) and the associated temporal patterns, said acquired data being corrected with regards to possible deviations by means of a comparison with data obtained by said one or more non-inertial sensors.

2. The system according to claim 1, **characterised in that** it includes a storage module (310) to save the acquired data that provide navigation and associated temporal pattern signals.

3. The system according to claim 2, **characterised in that** said storage module (310) is included in the electronic module (101).

4. The system according to claim 1, **characterised in that** it further comprises a precision land positioning device (104) to establish start and end coordinates of said section of the underground pipeline to be inspected.

5. The system according to claim 1, **characterised in that** the plurality of inertial sensors (304) comprises means for measuring linear accelerations and means for measuring angular velocities of the mobile platform (102), and **in that** the plurality of inertial sensors (304) are configured to acquire the data of the navigation signals in 2 or 3 dimensions.

6. The system according to claim 5, **characterised in that** the electronic module (101) further comprises, in association with the means for measuring linear accelerations of the mobile platform (102), means for calculating time and registering temperature (305) to compensate thermal deviations in the acquired data, and/or in association with said means for measuring angular velocities of the mobile platform (102), means for calculating time and registering temperature (305) and an analogue/digital converter (308) to digitise voltage data.

7. The system according to any one of the preceding claims, **characterised in that** the electronic module (101) comprises a sealed casing (201) to secure it to the mobile platform (102).

8. The system according to claim 1, **characterised in that**:
- the computation means form part of a computation device for processing the data acquired by the electronic module (101) and with the capacity to control the operation of said electronic module (101); and
- the electronic module (101) further comprises wireless communication means (309) to receive control instructions from said computation device and to transmit the corrected data and the temporal patterns to the computation device to carry out the calculation of the path.

9. The system according to claim 1, **characterised in that**:
- a first computation device is configured to control the operation of the electronic module (101);
- the computation means form part of a second computation device; and
- the electronic module (101) further includes wireless communication means (309) to receive control instructions from said first computation device and to transmit the corrected data and the temporal patterns to said second computation device.

10. The system according to claim 1, **characterised in that** computation means form part of the electronic module (101) itself and **in that** the electronic module (101) includes wireless communication means (309) to receive control instructions from a computation device and to transmit the corrected data and the temporal patterns to said computation device for the visualisation thereof.

11. A method for determining paths in underground pipelines, which comprises moving a mobile platform (102) in an underground pipeline to carry out an inspection thereof, said mobile platform (102) being connected to a reference system (103) that includes one or more non-inertial sensors and controls the distance travelled by the mobile platform (102), with respect to a reference point, as it moves through the underground pipeline, said method being **characterised in that** it further comprises:
- carrying out a mapping of a section of the underground pipeline to be inspected by means of:
∘ acquisition, by an electronic module (101) linked to said mobile platform (102), of data that provide navigation signals, obtained as the mobile platform (102) moves in said underground pipeline, and the acquisition of temporal patterns in which said data that provide navigation signals have been acquired, wherein said acquisition is carried out by a plurality of inertial sensors included in the electronic module (101); and
∘ detection and segmentation by using the data acquired by the plurality of inertial sensors (304) of the movement of the mobile platform (102) during the acquisition of said data, and
- calculating, by computation means, by means of the execution of a computation algorithm, the path followed by the mobile platform (102) in said section, taking into consideration at least said acquired data and the associated temporal patterns, said acquired data being corrected with regards to possible deviations by means of a comparison with data obtained by said one or more non-inertial sensors.

12. The method according to claim 11, **characterised in that** it comprises storing said acquired data and said associated temporal patterns before carrying out said calculation of the path.

13. The method according to claim 11, **characterised in that** it comprises establishing, in the mobile platform (102), start and end coordinates of said section of the underground pipeline to be inspected, by means of a land positioning device (104).

14. The method according to claim 11, **characterised in that** the electronic module (101) is controlled by a computation device that provides orders related to the acquisition moments of said data from the inertial sensors.

15. The method according to claim 14, **characterised in that** it further comprises providing additional information including at least a series of points of said section of the underground pipeline to be inspected in which defects have been identified and/or information about the distance travelled by the mobile platform (102), and **in that** the method further comprises synchronising said provided additional information with the calculation of the path followed by the mobile platform (102).
